# EUROPÄISCHE PATENTANMELDUNG

(11) **EP 3 301 890 A1**
(43) Veröffentlichungstag der Anmeldung: **04.04.2018**
(21) Anmeldenummer: 17194174.3
(22) Anmeldetag: 29.09.2017
(51) Int. Cl.: H04M 1/60, H04M 1/725, H04M 1/67

(54) **VERFAHREN ZUM BETRIEB EINES MOBILEN ENDGERÄTES MIT EINER SPERRSOFTWARE**

(30) Priorität: 30.09.2016 DE 102016011725
(71) Anmelder: Hoseit, Winrich, 50996 Köln (DE)
(72) Erfinder: Hoseit, Winrich, 50996 Köln (DE)
(74) Vertreter: Hübsch, Dirk

(57) **Zusammenfassung**

Die Erfindung betrifft ein Verfahren zum Betrieb eines mobilen Endgerätes (1), wobei eine Sperrsoftware auf dem Endgerät (1) ausgeführt wird, wobei mittels der Sperrsoftware Sperrbedingungen abgefragt werden, wobei, wenn die Sperrbedingungen erfüllt sind, mittels der Sperrsoftware eine Nutzung von zumindest Teilen der Programm- und/oder Bedienfunktionen des Endgerätes (1) gesperrt wird, wobei, wenn mindestens eine der Sperrbedingungen nicht mehr erfüllt ist, die Nutzung der vormals gesperrten Programm- und/oder Bedienfunktionen wieder freigegeben wird, wobei als eine Sperrbedingung Positionsdaten des mobilen Endgerätes (1) erfasst und mit Kartendaten verglichen werden, wobei bestimmt wird, ob das mobile Endgerät (1) sich im Bereich einer Verkehrsstraße befindet, wobei als eine weitere Sperrbedingung eine Eigengeschwindigkeit (4) des Endgerätes (1) ermittelt wird, wobei die Eigengeschwindigkeit (4) mit einem Grenzwert verglichen wird, wobei als weitere Sperrbedingung ermittelt wird, ob und wie viele weitere, benachbarte Endgeräte (10) in der Umgebung des Endgerätes (1) vorhanden sind, wobei überprüft wird, ob das Endgerät (1) in einem Freisprechmodus betrieben wird und mit einer Freisprecheinrichtung (7) verbunden ist, wobei zumindest eine Telefonfunktion des Endgerätes (1) beim gekoppelten Betrieb mit einer Freisprecheinrichtung (7) nicht gesperrt wird, wobei überprüft wird, ob sich das Endgerät (1) im Umfeld von mindestens n weiteren Endgeräten (10) länger als eine bestimmte Zeitdauer befindet, wobei das Endgerät (1) nicht gesperrt wird, wenn mindestens n weitere Endgeräte (10) vorhanden sind.

Die Gefahr durch die unerlaubte Nutzung von mobilen Endgeräten (1) im Straßenverkehr ist dadurch vermindert, dass wenn weniger als n weitere Endgeräte (10) vorhanden sind und mindestens eines der weiteren Endgeräte (10) mit einer Freisprecheinrichtung verbunden ist, das Endgerät (1) nicht gesperrt wird.

## Beschreibung

Die Erfindung betrifft ein Verfahren gemäß den Merkmalen des Oberbegriffes des Patentanspruches 1. Hierdurch wird ein Nutzungsbegrenzungssystem für mobile Endgeräte, nämlich Mobiltelefone, insbesondere Smartphones sowie an Mobilfunknetze angebundene Computer auf den jeweils gesetzlich vorgesehenen Umfang bereitgestellt.

Aus dem Stand der Technik ist ein mit der Freisprecheinrichtung eines Fahrzeugs gekoppeltes mobiles Endgerät in Form eines Smartphones oder eines gekoppelten mobilen Computers bekannt, wobei dieses Endgerät mit einer Freisprecheinrichtung gekoppelt werden kann. Die Sperrsoftware beschränkt bzw. sperrt im gekoppelten Zustand den verfügbaren Nutzungsumfang des Endgerätes.

Wer als Nutzer eines Smartphones oder mobilfunkgestützten Computers z.B. während der Fahrt auf öffentlichen Straßen, insbesondere in einem PKW oder LKW als Fahrer, außer den z.B. in Deutschland erlaubten Funktionen wie kabel- oder funkgebundenes Freisprechen und die Navigationsfunktionen, andere Funktionen auf den o.g. Geräten ausführt, wie z.B. E-Mails verfassen oder lesen, SMS-Nachrichten verfassen, absenden oder lesen, Webseiten im Internet aufruft liest und weiterschickt, WhatsApp- oder andere Nachrichten verfasst, versendet und oder liest, Spiele spielt u.ä., begeht nach der Deutschen Straßenverkehrsordnung aber auch nach anderen nationalen Straßenverkehrsordnungen eine Ordnungswidrigkeit oder führt zumindest unerlaubte Handlung aus. Das unerlaubte Nutzen solcher Geräte ist jeweils gesetzlich geregelt und erfordert nach Auffassung der jeweiligen nationalen Gesetzgeber bei deren Bedienung ein so hohes Maß an Aufmerksamkeit, die dem verantwortungsbewussten Führen eines Fahrzeuges (Personen- und Lastkraftwagen, Bussen, Motorrädern, Fahrrädern usw.) nicht entspricht und dadurch die Unfallgefahr im Straßenverkehr erheblich steigt. Die Zunahme von Unfällen, auch mit Todesfolge, durch derartige Ablenkungen vom Straßenverkehr wird inzwischen bereits durch Unfallforscher als auch Versicherer in verschiedenen Studien belegt.

Jeder Fahrer der sich mit einem Fahrzeug im Straßenverkehr bewegt, steht vor der Aufgabe, die Nutzung seines Mobiltelefons, insbesondere Smartphones oder mobilen Computers auf den gesetzlich erlaubten Umfang willentlich zu beschränken, tut dies aber in den seltensten Fällen.

Aus der WO 2013/043228 A ist ein Verfahren zum Sperren eines mobilen Endgeräts in Form eines Mobiltelefons bekannt. Es wird abgefragt, ob sich das mobile Endgerät innerhalb eines Fahrzeugs befindet. Dabei wird u.a. die Geschwindigkeit, der Ort, der Straßentyp, Wetterdaten, Verkehrsdaten usw. verarbeitet. Es wird dabei auch abgefragt, ob weitere mobile Endgeräte vorhanden sind. In Abhängigkeit von der Geschwindigkeit werden bestimmte Funktionen des Endgerätes gesperrt. Wenn mindesten eine der Sperrbedingungen nicht mehr erfüllt ist, wird die Nutzung der vormals gesperrten Funktionen wieder freigegeben. Wenn das Mobiltelefon in einer Halterung angeordnet ist und eine Freisprechfunktion vorhanden ist, so wird diese Freisprechfunktion nicht gesperrt.

Dieser Erfindung liegt die Aufgabe zugrunde, das Verfahren derart weiterzubilden und auszugestalten, so dass die Gefahr durch die unerlaubte Nutzung von mobilen Endgeräten im Straßenverkehr vermindert ist.

Diese der Erfindung zugrunde liegende Aufgabe wird nun durch ein Verfahren mit den Merkmalen des Patentanspruches 1 gelöst.

Als eine Sperrbedingung werden Positionsdaten des mobilen Endgerätes erfasst und mit Kartendaten verglichen, wobei bestimmt wird, ob das mobile Endgerät sich im Bereich einer Verkehrsstraße befindet. Nur wenn sich das Endgerät und damit der Benutzer im Bereich einer für Kraftfahrzeuge geeigneten Verkehrsstraße befindet, ist eine Sperre sinnvoll. Die Kartendaten sind vorzugsweise auf dem Endgerät gespeichert oder von dem Endgerät über eine Funkverbindung abrufbar. Ziel ist es abzuschätzen, ob der Benutzer des Endgerätes Fahrzeugführer eines Kraftfahrzeuges ist oder nicht. Dies wird versucht durch die Sperrbedingungen abzuschätzen. Wenn mindestens eines der Sperrbedingungen nicht mehr erfüllt ist, wird die Nutzung der vormals gesperrten Programmfunktionen oder Bedienfunktionen wieder freigegeben.

Als eine weitere Sperrbedingung wird eine Eigengeschwindigkeit des Endgerätes ermittelt, wobei die Eigengeschwindigkeit mit einem Grenzwert verglichen wird. Hierdurch kann ausgeschlossen werden, dass der Benutzer sich als Fußgänger fortbewegt. Die Grenze der Eigengeschwindigkeit kann bspw. 20 km /h betragen.

Als weitere Sperrbedingung wird ermittelt, ob und/oder wie viele weitere, benachbarte Endgeräte in der Umgebung des Endgerätes vorhanden sind. Hieraus kann ermittelt werden, ob der Benutzer sich in einem öffentlichen Verkehrsmittel befindet. Wenn mehr als n benachbarte Endgeräte vorhanden sind, dann kann daraus geschlossen werden, dass es sich um ein öffentliches Verkehrsmittel wie einen Bus oder eine Straßenbahn handelt. In diesem Fall wird keine Sperre eingerichtet. Die Anzahl n kann 4, 5 oder insbesondere 6 sein.

Wenn weniger als n weitere Endgeräte vorhanden sind und mindestens eines der weiteren Endgeräte mit einer Freisprecheinrichtung verbunden ist, wird das Endgerät ebenfalls nicht gesperrt. Aus dieser Bedingung kann gefolgert werden, dass das mit der Freisprecheinrichtung gekoppelte Endgerät dem Fahrer zugeordnet ist und die weiteren mobilen Endgeräte den Mitreisenden. Die entsprechenden Endgeräte der Mitreisenden werden nicht gesperrt.

Es werden insbesondere drei Kriterien mittels der Sperrsoftware festgestellt, nämlich zum Ersten, ob sich das jeweilige Smartphone oder der mobile Computer auf einem öffentlichen Weg oder einer öffentlichen Straße befindet, die für den öffentlichen Verkehr im Geltungsbereich der jeweiligen nationalen Straßenverkehrsordnung vorgesehen ist und zum Zweiten, ob die Eigenbewegung des Smartphones oder mobilen Computers dort mit einer höheren Geschwindigkeit für eine Zeitdauer erfolgt, die der jeweilige nationale Gesetzgeber für die eingeschränkte Nutzung vorgegeben hat, bzw. aus dem Bewegungsort und dem Bewegungsprofil daraus geschlossen werden kann und zum Dritten, ob sich weitere gleichartige Smartphones und/oder mobile Computer in unmittelbarer Nähe befinden.

Die hier beschriebene Erfindung betrifft eine automatisierte technische Beschränkung. Besonders ist sie geeignet für Mitarbeiter eines Unternehmens, die z.B. ein Firmenfahrzeug fahren und zudem noch während der Fahrt ein Firmen-Mobiltelefon, Firmen-Smartphone oder mobilen Firmen-Computer nutzen. Diese können durch den hier beschriebenen Prozess und das einmalige Aufspielen einer Steuerungssoftware bzw. Sperrsoftware einer zu der vom Gesetzgeber vorgesehenen eingeschränkten Nutzung gezwungen werden.

Der unerlaubte Funktionsumfang von Smartphones oder mobilen Computern für den Nutzer wird nun auch ohne die Anbindung oder Kopplung an andere Geräte in Abhängigkeit der länderspezifischen gesetzlich vorgeschriebenen Umstände für die Dauer des Aufenthaltes im Straßenverkehr auf den erlaubten Nutzungsumfang beschränkt. Die Beschränkung wird automatisch wieder aufgehoben, wenn die gesetzlich vorgeschriebenen Umstände zur eingeschränkten Nutzung dieser Geräte nicht mehr gegebenen sind. Smartphones oder mobile Computer, die dies ohne eine solche Kopplung zu einem im Fahrzeug integrierten Gerät können waren im Stand der Technik bislang nicht bekannt.

Bevorzugt ist die beschriebene Kombination, nämlich das Abschalten innerhalb des Smartphones oder mobilen Computers von allen nicht erlaubten Programmfunktionen u.U. in Verbindung mit dem Abschalten der dafür vorgesehenen Bedienelemente in Abhängigkeit von länderspezifischen Regelungen (vorzugsweise aus einer abrufbaren Matrix) für den Gebrauch von Smartphone und mobilen Computern, nämlich die Bewegungsgeschwindigkeit auf einem öffentlichen Verkehrsweg in Abhängigkeit vom Erkennen anderer sich in gleichbleibender Geschwindigkeit dort mitbewegenden anderen ähnlichen Endgeräten.

Folgende Informationen werden zur Entscheidung des Beschränkens oder Aufhebens der Beschränkung des Funktionsumfanges aus dem Smartphone oder mobilen Computer selbst sowie der hier beschriebenen Applikation eingeholt:

Über die hier beschriebene Applikation wird vorzugsweise festgestellt, in welchem nationalen Rechtsraum sich das Smartphone oder der mobile Computer befindet und aus der integrierten Matrix der hier beschriebenen Applikation wird ausgelesen, welche gesetzlichen Funktionen unter welchen Bedingungen in dem jeweiligen Smartphone oder mobilen Computer während der Teilnahme im Straßenverkehr erlaubt sind und welche nicht.

Als zweites wird vorzugsweise das integrierte Navigationssystem zwangsweise eingeschaltet bzw. geprüft, ob es bereits eingeschaltet ist. Das Navigationssystem kann ein GPS-Signal verarbeiten. Ist ein solches Navigationssystem nicht verfügbar wird über die hier beschriebene Applikation eine Triangulationsberechnung über die Funkmastsignale des Mobilfunkbetreibers vorgenommen und dann entweder über die Navigationsfunktion oder über die Triangulation festgestellt, ob sich das jeweilige Gerät schneller als in einer vordefinierten Geschwindigkeit, (z.B. mehr als 6 km/h (Fußgängergeschwindigkeit), 10 km/h (Fahrradgeschwindigkeit) oder 20 km/h (Kraftfahrzeuggeschwindigkeit) bewegt.

Ist das Kriterium der Geschwindigkeitsüberschreitung erfüllt, wird vorzugsweise über das im Smartphone befindliche Navigationssystem und eine dort schon hinterlegte elektronische Landgarte, wie z.B. Google Maps, oder aus der hier beschriebenen Applikation hinterlegte elektronische Landkarte, in der die Verkehrswege eingetragen sind, festgestellt, ob die Bewegung des hier beschriebenen Gerätes auf einer zum Straßenverkehr zugelassenen Straße stattfindet oder nicht.

Sind die entsprechende Sperrbedingungen erfüllt, wird vorzugsweise geprüft, ob das Endgerät während der Dauer der Geschwindigkeitsüberschreitung sich in einem Freisprechmodus, entweder per Bluetooth oder WLAN oder anderer Funkverbindung zu einer Freisprecheinrichtung oder per Kabel an eine Freisprecheinrichtung angebunden ist. Ist das der Fall, erfolgt für die Dauer der Anbindung an eine Freisprechvorrichtung keine Funktionsbeschränkung der sonstigen Applikationen oder der Bedienelemente; wird diese jedoch während des Gebrauchs unterbrochen und auf einen anderen Modus vom Nutzer des Smartphones oder mobilen Computers umgeschaltet, erfolgt automatisch die Funktionsbeschränkung auf den jeweils national erlaubten Funktions- bzw. Nutzungsumfang bzw. erfolgt die Beschränkung der Bedienung der Funktionselemente auf den jeweiligen gesetzlich erlaubten Umfang.

Besteht keine wie oben beschriebene Verbindung zu einer Freisprecheinrichtung erfolgen die o.g. Beschränkungen von unerlaubter Bedienung und von der unerlaubten Nutzung während einer Fahrt im Straßenverkehr. Diese Beschränkungen werden jedoch wieder aufgehoben, wenn die Fahrt für länger als ein vordefinierter Zeitraum (vorzugsweise länger als 60 Sekunden) unterbrochen ist oder aber sich auf einem nicht für den Straßenverkehr zugelassenen Bereich stattfindet.

Es wird von der hier beschriebenen Sperrsoftware/Applikation untersucht, ob sich zusammen mehr als n Bluetooth- oder WLAN-Funkeinheit im unmittelbaren Umfeld (vorzugsweise im Funk-Sicht Bereich von weniger als 10 Metern) befinden, die sich mit gleicher Geschwindigkeit über einen längeren als vordefinierten Zeitraum (als z.B. mehr als 60 Sekunden) in gleicher Richtung bewegen, bzw. deren Identität nicht als wechselnd festgestellt wird, wird angenommen, dass sich der Nutzer in einem Bus befindet in dem Nutzungsbeschränkungen des eigenen Smartphones oder des mobilen Computers nicht erforderlich sind; somit werden diese auch nicht ausgeführt. Bei mehr als n zuzüglich des mit der hier beschriebenen Applikation ausgestatteten Smartphone bzw. mobilen Computer, also zusammen bspw. fünf (n=4) oder sieben (n=6) Geräten wird unterstellt, dass die höchstzulässige Anzahl von Insassen in einem PKW überschritten ist und insofern nicht vorkommt.

Sind weniger als n weitere Smartphones oder mobile Computer mit gleicher Geschwindigkeit unterwegs, wird vorzugsweise angenommen, dass sich der Nutzer in einem PKW, LKW, Omnibus auf einem Motorrad, Mofa oder Fahrrad oder ähnlichen Fahrzeug befindet und die Bedingungen für die Nutzungsbeschränkungen werden herangezogen.

Vorzugsweise wird durch den Eingriff der hier beschriebenen Sperrsoftware/Applikation die Möglichkeit, Notrufe abzusetzen, nämlich eine entsprechende Notruffunktion nicht berührt und somit auch nicht beschränkt.

Die einzelnen Funktionen dieser Programmschritte vermeiden die eingangs genannten Nachteile; nämlich das gesetzwidrige Nutzen von Smartphones sowie mobilen Computern im Straßenverkehr; die entsprechenden Vorteile, nämlich die Reduzierung der Funktionen auf den gesetzlich erlaubten Umfang sind erzielt.

Das Verfahren und die Sperrsoftware bilden ein automatisches Nutzungsbegrenzungssystem zur einfachen automatisierten, sicheren und mit Prüf- und Filter-Algorithmen versehenen Begrenzung von während des Führen eines Fahrzeuges im Straßenverkehr nicht erlaubten Programm- und Bedienungsfunktionen, insbesondere von Smartphones und mobilen Computern auf die in Abhängigkeit von geostationärer Position, Positionsverlauf und Geschwindigkeit oder dem sonstigen Umfeld des jeweiligen Nutzers und des bei ihm befindlichen Gerätes auf den gesetzlich erlaubten Umfang der Nutzung des jeweiligen Gerätes beschränkt als auch die Wiederherstellung des ursprünglichen Funktionsumfanges ausführt sobald der wie oben definierte Zustand die gesetzlich definierte Nutzungsbegrenzung nicht mehr erfordert.

Es gibt nun viele Möglichkeiten, das Verfahren auszugestalten und weiter zu bilden. Hierzu wird auf die dem Patentanspruch 1 nachgeordneten Patentansprüche verwiesen. Im Folgenden wird eine bevorzugte Ausgestaltung der Erfindung anhand der Zeichnung und der dazugehörigen Beschreibung in den folgenden Schritten erläutert.

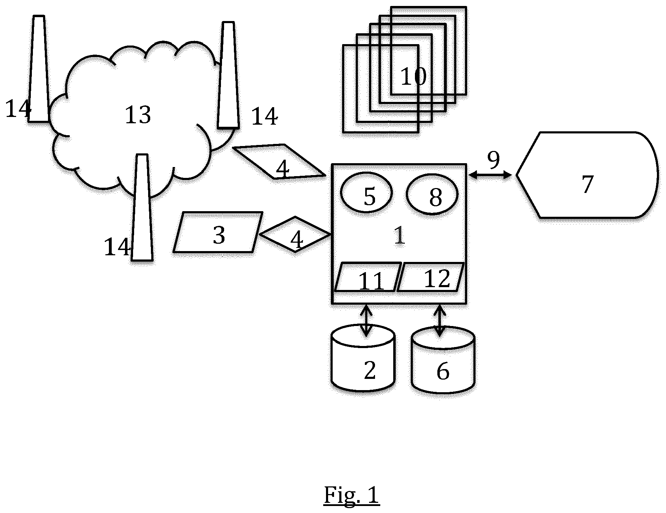

In der Zeichnung zeigt Fig.1 ein stark schematisches Schaubild.

Es ist ein mobiles Endgerät vorzugsweise in Form eines Smartphones 1 bzw. einen mobilen Computer auf dem die hier beschriebene Applikation in Form einer Sperrsoftware als nicht ohne externe Autorisierung löschbar installiert ist. Die Sperrsoftware ist durch einen Sperrcode deaktivierbar.

Mittels der Sperrsoftware werden mehrere Verfahrensschritte ausgeführt:

Schritt 1: Über die hier beschriebene Applikation/Sperrsoftware wird in permanent über das integrierte oder angeschlossene Navigationssystem 3, und wenn nicht verfügbar über eine Triangulation, d.h. eine Signallaufzeitmessung zwischen mindestens drei Mobilfunkmasten im Mobilfunknetz 13 die Eigengeschwindigkeit des Smartphones 1 bzw. mobilen Computers nachverfolgt.

In Schritt 2 wird über eine integrierte Uhr wird gemessen, wie lange die aus der Datenbank 3 entnommene Vorgabe der Eigengeschwindigkeit 4 über- oder unterschritten wird. Sind die in der Datenbank 2 vorgegebenen Werte beide kleiner als die so gemessenen werden keine weiteren Schritte eingeleitet; sind jedoch beide Werte größer als vorgegeben bereiten diese die Entscheidung zur Nutzungsbeschränkung aller unerlaubten Applikationen 11 bzw. die Entscheidung zur Beschränkung der Bedienelemente Fig. 12 vor und gehen zu Schritt 3.

In Schritt 3 wird zeitgleich, bevorzugt über das Navigationssystem 3 aber auch oder ersatzweise über die Triangulation im Mobilfunknetz 13 die eigene geostationäre Position festgestellt und abgeglichen mit den Daten aus der elektronischen Landkarte 6 und festgestellt, ob sich das Smartphone bzw. der mobile Computer auf einer zum Straßenverkehr vorgesehenen Straße befindet und oder nicht. Wird so festgestellt, dass die Eigenbewegung auf einer zum Straßenverkehr vorgesehenen Straße erfolgt, wird die Entscheidung zur Nutzungsbeschränkung aller unerlaubten Applikationen 11 bzw. die Entscheidung zur Beschränkung der Bedienelemente 12 weiter vorbereitet und führt zu Schritt 4.

In Schritt 4 wird dauerhaft überwacht und festgestellt, ob entweder über die Funkeinheit(en) 8 oder über eine Kabelverbindung 9 eine Verbindung zu einer angeschlossenen Freisprecheinrichtung 7 besteht oder nicht. Wird so festgestellt, dass keine derartige Verbindung besteht, wird die Entscheidung zur Nutzungsbeschränkung aller unerlaubten Applikationen 11 bzw. die Entscheidung zur Beschränkung der Bedienelemente 12 weiter vorbereitet und führt zu Schritt 5.

In Schritt 5 wird dauerhaft oder in hinreichenden Zeitabständen über die Funkeinheit(en) 8 überwacht und festgestellt, ob und wie viele benachbarte Endgeräte 10 bspw. benachbarte Smartphones und/oder benachbarte Computer sich ebenfalls mit gleicher Geschwindigkeit wie das Endgerät 1 bewegen. Wird festgestellt, dass es weniger als vier sind führt das zu Schritt 6.

In Schritt 6 wird festgestellt, welche vom Gesetzgeber vorgesehenen Applikationen 11, die während der Fahrt im Straßenverkehr nicht oder nur eingeschränkt genutzt werden dürfen sich noch auf dem Endgerät 1 befinden und welche Bedienelemente 12 hierfür vorgesehen sind. Ist dies festgestellt führt das zu Schritt 7.

In Schritt 7 werden alle so zur zeitlichen Nutzungsbeschränkung oder zur zeitlichen Beschränkung der Bedienelemente 12 relevanten Messergebnisse ausgewertet und es werden alle unerlaubten Applikationen 11 abgeschaltet und/oder deren Bedienelemente 12 abgeschaltet, wenn die folgenden Bedingungen erfüllt sind:
Schritt 1: die Eigengeschwindigkeit ist höher als vorgegeben
Schritt 2: die Dauer der Eigengeschwindigkeit ist größer als vorgegeben
Schritt 3: der Bewegungsverlauf ist auf einer Verkehrsstraße
Schritt 4: es besteht keine Verbindung zu einer Freisprechanlage
Schritt 5: weniger als n benachbarte Geräte 10 sind im gleichen Bewegungsverlauf

### Schritt 7:

Die Schritte 1 und 2 laufen auch nach der Abschaltung der zur Nutzung im Straßenverkehr unerlaubten Applikationen bzw. unerlaubten Applikationsteile weiter. Sollte so festgestellt werden, dass die Zeitdauer der Eigenbewegung kleiner als in der Matrix der Datenbank 2 vorgesehen, werden die Abschaltungen der unerlaubten Applikationen bzw. der dazugehörigen Bedienelemente und oder Bedienfunktionen automatisch wieder rückgängig gemacht.

### Begriffserklärung:

- Bluetooth:: ein nach IEEE 802.15 festgelegter Funkstandard
- WLAN:: ein nach IEEE 802.11 festgelegter Funkstandard
- Google Maps:: ein online Kartendienst der US-amerikanischen Google Inc.
- GPS:: Global Positioning System
- PKW:: Personenkraftwagen
- LKW:: Lastkraftwagen

### Bezugszeichenliste:

- 1: Endgerät
- 2: Datenbank
- 3: Navigationssystem
- 4: Eigengeschwindigkeit
- 5: Uhr
- 6: Landkarte
- 7: Freisprecheinrichtung
- 8: Funkeinheit
- 9: Kabelverbindung
- 10: benachbarte Endgeräte
- 11: unerlaubte Applikation
- 12: Bedienelement
- 13: Mobilfunknetz

## Patentansprüche

1. Verfahren zum Betrieb eines mobilen Endgerätes (1), wobei eine Sperrsoftware auf dem Endgerät (1) ausgeführt wird, wobei mittels der Sperrsoftware Sperrbedingungen abgefragt werden, wobei, wenn die Sperrbedingungen erfüllt sind, mittels der Sperrsoftware eine Nutzung von zumindest Teilen der Programm- und/oder Bedienfunktionen des Endgerätes (1) gesperrt wird, wobei, wenn mindestens eine der Sperrbedingungen nicht mehr erfüllt ist, die Nutzung der vormals gesperrten Programm- und/oder Bedienfunktionen wieder freigegeben wird, wobei als eine Sperrbedingung Positionsdaten des mobilen Endgerätes (1) erfasst und mit Kartendaten verglichen werden, wobei bestimmt wird, ob das mobile Endgerät (1) sich im Bereich einer Verkehrsstraße befindet, wobei als eine weitere Sperrbedingung eine Eigengeschwindigkeit (4) des Endgerätes (1) ermittelt wird, wobei die Eigengeschwindigkeit (4) mit einem Grenzwert verglichen wird, wobei als weitere Sperrbedingung ermittelt wird, ob und wie viele weitere, benachbarte Endgeräte (10) in der Umgebung des Endgerätes (1) vorhanden sind, wobei überprüft wird, ob das Endgerät (1) in einem Freisprechmodus betrieben wird und mit einer Freisprecheinrichtung (7) verbunden ist, wobei zumindest eine Telefonfunktion des Endgerätes (1) beim gekoppelten Betrieb mit einer Freisprecheinrichtung (7) nicht gesperrt wird, wobei überprüft wird, ob sich das Endgerät (1) im Umfeld von mindestens n weiteren Endgeräten (10) länger als eine bestimmte Zeitdauer befindet, wobei das Endgerät (1) nicht gesperrt wird, wenn mindestens n weitere Endgeräte (10) vorhanden sind, **dadurch gekennzeichnet, dass** wenn weniger als n weitere Endgeräte (10) vorhanden sind und mindestens eines der weiteren Endgeräte (10) mit einer Freisprecheinrichtung verbunden ist, das Endgerät (1) nicht gesperrt wird.

2. Verfahren nach Anspruch 1, **dadurch gekennzeichnet, dass** abgefragt wird, in welchem nationalen Rechtsraum sich das Endgerät (1) befindet, wobei die Sperrbedingungen und/oder die zu sperrenden Programmfunktionen und/oder Bedienfunktionen in Abhängigkeit des festgestellten nationalen Rechtsraumes ausgewählt werden.

3. Verfahren nach Anspruch 1 oder 2, **dadurch gekennzeichnet, dass** zur Positionsbestimmung ein Navigationssystem (3) des mobilen Endgerätes (1) verwendet wird und/oder eine Triangulationsberechnung über Funkmastsignale eines Mobilfunknetzes (13) berechnet werden.

4. Verfahren nach einem der vorstehenden Ansprüche, **dadurch gekennzeichnet, dass** die Sperrsoftware durch einen Sperrcode deaktivierbar ist.

5. Verfahren nach einem der vorstehenden Ansprüche, **dadurch gekennzeichnet, dass** n gleich 6 ist.

6. Verfahren nach einem der vorstehenden Ansprüche, **dadurch gekennzeichnet, dass** eine Notruffunktion nicht durch die Sperrsoftware gesperrt wird.

7. Sperrsoftware zur Ausführung des Verfahrens nach einem der vorstehenden Ansprüche.

8. Mobiles Endgerät mit einer Sperrsoftware gemäß dem vorstehenden Anspruch.

9. Mobiles Endgerät nach dem vorstehenden Anspruch, **dadurch gekennzeichnet, dass** das mobile Endgerät als Smartphone ausgestaltet ist.
